# EUROPEAN PATENT APPLICATION

(11) **EP 2 034 242 A2**
(43) Date of publication of application: **11.03.2009**
(21) Application number: 08163894.2
(22) Date of filing: 08.09.2008
(51) Int. Cl.: F23G 5/027, F23G 5/033, F23G 5/08, F23G 5/46, F23G 5/50, F23G 7/00

(54) **Waste disposal plant and related process**

(30) Priority: 10.09.2007 IT PD20070288
(71) Applicant: Exel 3 S.r.L., 20121 Milano (IT)
(72) Inventor: ABATE, Valerio, 21047, Saronno (Varese) (IT); BIANCHI, Michela, 20123, Milano (IT); CONTI, Alberto, 20123, Milano (IT)
(74) Representative: Gallo, Luca

(57) **Abstract**

Waste disposal plant comprising a tank (3) for holding reactant substances (5) with a high carbon content; a tank (9) for holding dry products; a water pipe (20) for supplying the plant with water (21); a reactor (24) with a plasma torch (25); a logic control unit for channelling, to the reactor (24), controlled amounts of reactant substances, dry products and water (21), determining their disintegration through pyrolysis forming wastes (32) and a synthesis gas(31) having carbonaceous compounds, water vapour and oxygen contents measures through diagnostics means (36, 37, 39) arranged to intercept the synthesis gas (31) and controlled in feedback by the logic control unit through the controlled actuation of transport means and a valve (23) of the water pipe (20).

## Description

### Field of application

The present invention concerns a waste disposal plant and the related disposal process.

The plant and process in question are intended to be advantageously used where the disposal of different types of waste, for example municipal waste, is required. However such plant and method can be easily adapted for disposing waste of the industrial type.

The plant van be installed in proximity to residential areas, where it is necessary to guarantee low levels of pollution.

Therefore, such plant and such process are classified as waste disposal plants having low pollutant emissions.

### State of the art

Increase of environmental pollution and the problem regarding the ever-growing increase of the amount of waste to be disposed have directed the research towards the development of new solutions to problems regarding the disposal and recovery of waste.

The yearly production of waste in municipal areas reaches thousands of tons and the waste composition of this type varies a lot depending on the position within the city, geographical location and season.

Alongside production of wastes in the municipal areas, particularly concerning is the need to eliminate special wastes and harmful slag mater for example coming from hospitals, vehicle scrap material and industrial wastes.

For example, according to a PhD dissertation "Hydrogen from waste and CO2 sequestration" by Marco Tellini the waste composition matter in municipal areas is outlined by the following table, which indicates the percentage in minimum weight, maximum and average weight of different substances composing municipal wastes, according to the research carried out:

| Fractions | wt-% min | *wt-% max* | wt-% avg |
|---|---|---|---|
| Paper and cardboard | 12 | 44.7 | |
| Textiles | 1.4 | 9.4 | |
| Plastics | 4.1 | 21.4 | |
| Metals | 2.3 | 6.9 | |
| Organics | 16.1 | 51.8 | |
| Inerts | 3.4 | 16.5 | |
| Carbon | | | 28.47 |
| Nitrogen | | | 0.68 |
| Sulphur | | | 0.49 |
| Chlorine | | | 2.07 |

The variety in the composition of the waste depends on the geographical location, as shown in the following table, indicated in which, for each geographical area in the Italian territory, is data related to the production and waste composition.

| | | | North | Centre | South |
|---|---|---|---|---|---|
| Waste production | [t/y 10⁶] | 29 | +3.3% | +2.4% | +0.3% |
| Production pro-capita | [kg/y] | | 514 | 557 | 454 |
| In metropolitan areas | [kg/y] | 650 | | | |
| Differentiated prod. | [t/y10⁶] | 4.2 | 3.25 | 0.7 | 0.23 |
| Differentiated prod. | [%] | 14.4 | 24.4 | 11.4 | 2.4 |
| Paper | [t/y10³] | 1308 | 957 | 266 | 85 |
| Organics | [t/y10³] | 1298 | 1073 | 173 | 47 |
| Plastics (*) | [t/y10³] | | 131.5 | 27.5 | 15.7 |
| Glass | [t/y10³] | 759 | 609 | 106.7 | 10 |
| Metals | [t/y10³] | 213 | 148 | 53 | 11 |

| | | | | | |
|---|---|---|---|---|---|
| (*) the plastics introduced with packaging are about 750000 t/year | | | | | |

In the following table in particular, indicated for each of the 6 sample towns is the energy content and the waste composition in the municipal areas:

| | kcal/kg | H2O | C | H | O | N | C | S |
|---|---|---|---|---|---|---|---|---|
| Milano | 2196 | 35.10 | 24.60 | 5.20 | 14.90 | 0.80 | 0.50 | 0.10 |
| Roma | 2232 | 34.10 | 26.40 | 2.80 | 16.10 | 0.50 | 1.10 | 0.40 |
| Palermo | 1984 | 35.00 | 29.20 | 4.30 | 14.50 | 0.80 | 0.10 | 0.20 |
| Reggio E. | 2312 | 35.10 | 30.20 | 3.80 | 13.30 | 0.40 | 0.60 | 0.40 |
| Carpi | 2279 | 16.70 | 30.10 | 4.60 | 12.40 | 0.40 | 0.50 | 0.40 |
| Parma | 2147 | 34.60 | 27.00 | 2.90 | 15.20 | 0.40 | 0.50 | 0.30 |
| RANGE | 1980-2310 | 16-35 | 25-30 | 2.8-5.2 | 12-16 | 0.4-0.8 | 0.1-1.1 | 0.1-0.4 |

Currently known are various apparatus form disposing waste, such apparatus being based on various technologies, for example operating through thermal destruction, or through encapsulation and burying.

However, all the methods for disposing waste matter known up to date have various drawbacks among which the required use of incoming waste flows of the same type, that is with a preset composition and with a low amount harmful residue matter. Furthermore, most of the abovementioned waste methods lead to the dispersion of harmful dusts into the air and formation of waste matter of difficult disposal.

Use of waste disposal through thermal action, in particular through a plasma torch is already known to the prior art.

The US 4644877 patent concerns a plant and a method for the pyrolytic destruction of toxic or hazardous waste materials through a plasma arc burner. Waste materials are fed into a plasma arc burner where they are atomized and ionized at a temperature higher than 5000°. Subsequently, they are introduced into a reaction chamber where they recombine generating products in gaseous state and in solid state in form of particulates. The products generated by the recombination are quenched by means of a spray ring located in proximity to the reaction chamber. More in detail, such ring sprays an alkaline spray which neutralises the products and wets the particulate. The gas is extracted from the reaction chamber or used as fuel. Monitoring devices are used to check the recombined products and automatically shut down the apparatus if hazardous constituents are encountered therein.

The disposal method described in the abovementioned patent provided for the direct feeding of the inflowing wastes unto the burner creating some difficulties in the ionisation and in the atomisation of the same in case the waste composition differs from the preset standards. Furthermore, the presence of hazardous causes the plant to block.

The EP 1607466 patent concerns a process for continuous disposal of waste with a predetermined composition, such process comprising the steps of generating a plasma arc in a first chamber through a plasma torch and feeding into a second chamber adjacent to the first the waste material to be disposed. Such second chamber is separated from the first chamber by a high thermal conductivity separation element. Therefore, the plant allows the combustion of the waste matter without directly exposing the torch to the chemical aggression of the gases formed during the combustion.

However, the disposal process described in this patent does not allow the combustion of all types of waste matter, but it requires wastes of a predetermined composition.

The US 5280757 patent comprises a waste disposal plant comprising an electric plasma torch as a source of heat for the combustion of municipal waste. The waste is arranged inside a reactor wherein the combustion of waste occurs with the production of gas and slags with a lower amount of toxical elements with respect to the fed waste.

Also in this patent, è it is provided for that the waste has a specific composition, thus a variation in their composition is critical for the proper operation of the plant. Furthermore, the torch is directly exposed to the chemical aggression of of the gases formed inside the reactor.

### Presentation of the invention

Therefore, in this situation, an essential object of the present invention is that of overcoming the drawbacks observed in the disposal plants of the known type, by providing a waste disposal plant and process allowing to improve the efficiency of the disposal.

Another object of the present finding è is that of providing a waste disposal plant and process capable of reducing the production of pollutants and capable of adaptation to various types of wastes to be disposed to maintain an efficient operation and with high profitability.

Another object of the present finding is that of providing a waste disposal plant and method entirely safe from an operative point of view.

Further object of the present finding is that of providing a waste disposal plant and process which is easy to install and entirely reliable.

Further object of the present finding is that of providing a plant with a particularly small overall dimension, specifically adapted to be installed in municipal areas.

### Brief description of the drawings

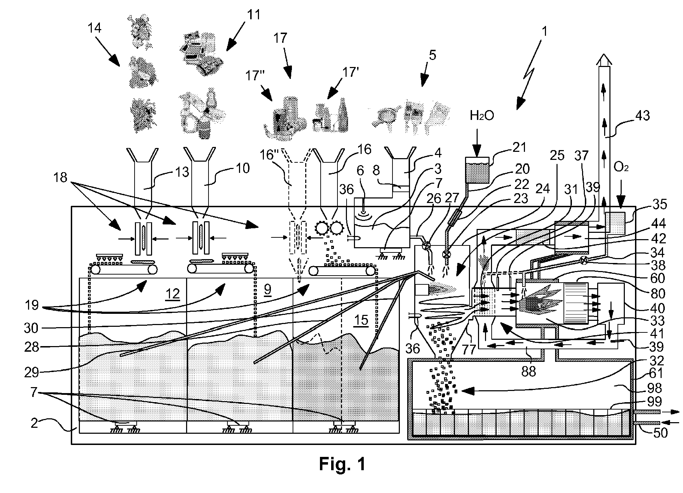

The technical characteristics of the finding, according to the abovementioned objects, are clearly observable from the contents of the claims provided hereinafter and the advantages of the same shall be clearer in the subsequent detailed description, provided with reference to the attached drawings, which represent its embodiment strictly provided for exemplifying and non-limiting purposes, wherein figure 1 shows a schematic view of the assembly of the waste disposal plant according to the present invention.

### Detailed description of a preferred embodiment

According to the figures of the attached drawings, the waste disposal plant subject of the present invention was indicated in its entirety with 1. The plant according to the present invention is capable of disposing wastes of all types in particular municipal wastes, which can usually contain dry products (plastic, paper, fabrics, fibres etc ) wet waste (plant or animal organic waste) inert material (glass, metal material) reactant substances (used oil of plant or animal type used for feeding purposes, engine oil, gas oil etc).

In order to optimise the disposal process by means of the plant 1, with a plasma torch, of the present invention, the abovementioned wastes are initially held in separate collection tanks.

The plant 1 shall be advantageously obtained with a single framework 2 made of steel fixed below the road level to allow an easy use thereof even in towns without requiring special areas and thus without causing particular problems linked to the overall dimension.

As a matter of fact, as specified in detail hereinafter the overall dimension of the plant 1 according to the invention is limited to a few pipes for introducing the wastes in a separated manner and a chimney for evacuating fumes.

More in detail, Provided for is a first tank 3 supported by the framework 2, conveyed into which, through a first pipe 4, are reactant substances 5 containing a high amount of carbon or hydrogen and therefore capable of efficiently supporting the combustion reaction described hereinafter. The reactant substances 5 comprise used oils of the plant or animal type, engine oils, gas oil or other fuels. The reactant substances 5 shall be introduced both by the users, in particular by the common citizens where separate waste collection, and by the workers in charge of managing and maintaining the plant 1, the latter being required to control the load level of the first tank 3. For such purpose, the abovementioned first tank shall be suitably provided with a level sensor 6 (for example the ultrasonic type) and/or with a loading cell 7 to allow controlling the amount of reactants 5 present therein.

The data detected by the sensors is sent to the logic control unit for the management of the plant 1 which, as better specified hereinafter, jas the objective of controlling the operation of the plant 1 itself in an automatic manner or with the help of an operator.

Advantageously, the first pipe 4 is intercepted by first filtering means 8 intended to prevent the introduction of unwanted substances such as solid substances or substances capable of damaging the plant (acids, explosive substances or other substances) into the first tank 3 .

Further provided for are a second tank 9 for holding dry products 11 such as plastic, paper, fabrics, fibres etc, through a second pipe 10 and a third pipe 12 per for holding wet products 14 such as plant or animal organic wastes through a third pipe 13 .

The abovementioned separation does not cause particular problems to citizens who are required to collect waste separately in advance in their homes. As a matter of fact, the abovementioned separate collection has been in force over many years in various towns and regions and therefore it is a common practice. Both the tanks 9, 12 are supported by the framework 2 and are provided with loading cells 7 for evaluating the amount of mass held therein. The capacity of the tanks 9, 12 also takes into account the specific use the plant 1 is intended for. Therefore, for example in an industrial area the tank 12 holding wet products may be small in size or not be present at all.

Additionally, preferably provided for is a fourth tank 15, also provided with its own loading cell 7, which is intended to hold inert material 17 such as glass and metal materials. The latter are introduced through a fourth pipe 16 and preferably they do not take part in the combustion reaction and therefore they shall be delivered directly into the waste tank 98, which shall be described hereinafter.

Each loading cell shall be arranged both at the base of the tank and be suspended form above.

Before entering into their respective tanks 9, 12 and 15, the dry products 11, wet products 14 and inert products 17 shall be first compacted by means of special compactors 18 and then finely ground by special grinders 19.

The compactor 18 may advantageously be made up of a hydraulic press of the type used in the in the reference industry for example those used by the municipal cleansing trucks to reduce the size of the wastes.

The grinder 19 may be obtained by means of rotating blades (solution particularly adapted for dry products 11 and for wet products 14) or by means of adjacent and counter-rotating rollers defining a cleft into which the wastes (especially glass) are drawn to pass, or it can be obtained by means of a nozzle adapted to release high pressure jets.

Considering the inert products 17 glass is easier to grind with respect to metals and, furthermore, contrary to metal materials, it can take part in combustion reactions as a moderator to reduce the reactivity of wastes particularly rich in carbon.

Therefore, provided for can be a further separated storage for glass and metals respectively indicated with 17' and 17" by providing for a further tank 15" for metals introduced through pipe 16".

The glass 17' may be subjected to a simple crushing by means of a grinder 19 with opposite rollers while the metal materials 17" may be simply compacted by means of a press 18.

Dry 11 and wet 14 products may be ground without being subjected to compaction in advance.

The compactors 18 and the grinders 19 are not described in detail given that they are not a specific subject of the claims and they can be of the type already used available in the market and well known to a man skilled in the art.

Otherwise, according to an embodiment of the present invention (not illustrated but included in the variants known by a man skilled in the art) provided for might be a single compaction and grinding system selectively operating on the product conveying it to the tank intended thereof.

Furthermore, provided for is a water pipe 20 adapted to supply water 21 to the plant 1 in a regular manner, la the pipe being intercepted by w water flow switch 22 and by a valve 23 (for example a butterfly valve) connected to the logic control unit mentioned beforehand to regulate the flow-rate of the transiting water.

According to the idea on which the present invention is based, the plant 1 comprises a reactor 24 with a plasma torch 25 and a plurality of feed screws and pipes for delivering - into the reactor 24 in proximity to the torch 25 - the various substances considered beforehand, that is: dry products 11, wet products 14, reactant products 5, water 21 and possibly glass 17'.

More in detail, provided for is a pipe 26 for delivering reactants 5 from the first tank 3 to the reactor 24, intercepted by a valve 27, and feed screws 28, 29 and 30 with an independent motorisation, respectively for delivering dry products 11, wet products 14 and glass to the reactor 24. The feed screws 28, 29 and 30 may be replaced by the first, second and third transport means such as for example conveyor belts.

The valves and the motorisations of the feed screws are controlled by the control unit to define the desired operation as specified hereinafter.

The plasma torch 25 is formed by a pair of electrodes made of ferromagnetic material covered by ceramics or carbon, applied between which is the potential difference which triggers an arc. The latter increases the temperature inside the reactor 24 until it determines the pyrolysis of all the substances introduced in the same reactor. Oxygen is not substantially present in the reactor and thus the waste combustion reaction is not triggered.

The pyrolysis induced by the torch 25 disintegrates the products at an extremely high temperature (typically in the range of 3000 to 10,000 °C) generating an intermediate product that is a synthesis gas usually referred to in the technical jargon by the term "syngas" 31 and leaving the vitreous and metal particles 32 to precipitate in a special tank for the waste material, already previously indicated with reference 98.

The vitreous mass 32 produced by the heavy particles separated in the pyrolysis process shall compact at the bottom of the tank 98 on a special separation septum 99, intended to delimit the volume in cells to form inert blocks which can recycled subsequently.

The syngas 31 is conveyed towards a combustion chamber 33 facilitated by a narrow passage 77 provided for in the reactor 24 beneath the torch 25. In order to get to the combustion chamber 33 the syngas advantageously exceeds an elbow-shaped portion provided for in the conveying pipe 88 intended to prevent vorticity from forming in the flow of the same syngas and to create a suction towards the combustion. Introduced into the combustion chamber 33 is a little amount of oxidant mixture dwhich combined with the high temperature determines the spontaneous burning of the syngas. The oxidant could be made up of air but preferably, it shall be substantially made up of oxygen alone in order to avoid introducing further nitrogen which would be added to the one already introduced alongside the wastes and which would lead to the formation of harmful derivatives such as NOₓ and sulphur dioxide, which must obviously not be produced.

Emission of oxygen is provided for by means of a pipe 34 which is supplied by oxygen generation means 35 which might be represented by a gas cylinder or by an oxygen enricher capable of extracting oxygen from the air, advantageously through electric power supply generated by the same plant 1.

The plant 1 has the main object of treating wastes and thus it should set itself during the operation in such a manner to channel the wastes, through the abovementioned feed screws into the reactor 24 at an amount suitable a to allow maintaining the combustion in the chamber 31.

More in detail, provided for is an initial step for starting the reactor 24 in which the torch 25 is supplied with the reactant 5 alone, through the pipe 26 and possibly also with water 21 through the pipe 20.

In this step, the control unit - through the diagnostic means to be described hereinafter - is capable of checking the thermal end chemical characteristics of the synthesis gas in such a manner to be able to set the supply of single components to the reactor.

In particular, the measured values and the parameters calculated thereof are compared with the reference data set by the logic control unit during the testing in presence of well defined conditions related to the quantity and quality of the reactant 5 (gas oil) and water.

The variation of the measured values with respect to the reference values provides a correction factor (or figure of merit) of the reactant 5.

Subsequent to the step of introducing he reactant 5 (fuel) and water, the operation for setting and adjusting the operation of the reactor may also provide for the introduction of preset amounts dry products 11, or wet products 14 or gas products 17' to calculate the reply of the of te reaction in the torch 25 and thus the characteristics of the syngas and hence enable setting the best operating performance of the priorities set in the in the programmable logic control unit.

The addition of one component at a time (11, 14 or 17') allows extracting - for each component - a series of values (related to temperature, percentages of water and carbonaceous compounds as specified hereinafter) measured by the sensors depending on the quantity (in weight) of the component introduced . The data acquired for each component is advantageously organised in matrices which depending on the percentages (in weight) of the components provides the operation variables required for the characteristics of the syngas that is for the objects of the plant 1.

The acquired data is processed following a procedure memorised in the control unit and compared with the data selected as the optimum data for the behaviour of the plant 1 according to a preferred operation.

At the end of this auto-setting step of the plant 1 the control unit is therefore capable of both selecting the wastes and the amounts at which they should flow into the reactor 24. The regulation shall be performed constantly and not only at the beginning of the process with the aim of maintaining the operation variables of the plant close to the optimum test for the operation and objective set .

Therefore, once through with the setting step, during the normal subsequent operation, the control unit - according to the example of the level of richness of the carbon present in the wastes- shall dose the required amount of the various products with the aim of maintaining the desired chemical reactions in the combustion chamber 31.

The operation of the plant 1 depends on the priority set in the control unit which generally tries, for example, to maximise the reduction of waste 11, 14 and minimise the use of reactants 5. As a matter of fact, in certain ways is the most precious component in that it has the highest energy content for the combustion and it is easier to dispose.

Advantageously, the combustion may be intended for running an engine, for example an otto cycle or sterling engine, adapted to rotate a dynamo for the production of electrical energy. Such energy can be used for supporting the power supply to the electrodes of the plasma torch 25. The residue heat of the combustion process can for example be transferred ad to a water heating system for a building generally indicated with 50. The latter shall be adavantageosly also adapted to recover the heat from the waste tank 98 as schematically indicated in the figure.

Otherwise, the expansion of the gas during the combustion may be used in turbine, still to generate electric energy.

Otherwise, still the hot gas produced in the burner 33 may be entirely exploited in a first water/gas exchanger 60 to generate thermal energy useable for example in the water heating system 50 of a building.

In this case, the abovementioned exchanger 60 may for example lower the temperature of the syngas up to a temperature range comprised between 700-900°C and thus facilitating the condensation of possible pollutants such as reducing agglomerates, unburnt residues and carbonaceous particulates.

As explained hereinafter, such particles may be further eliminated in a further pyrolysis 41 and post-combustion or in a catalytic converter 43.

According to a preferred solution of the present invention, illustrated in the attached drawings, arranged in series shall be the first water/gas exchanger 60 and a turbine indicated with 80.

The waste tank 98 containing the vitreous mass produced by the heavy particles separated in the pyrolysis process may be covered with a water coating 61 insulated from the external where it shall transfer its thermal energy therefore accumulating it in a water container easily useable for heating buildings. Such coating 61 may be in communication with the first exchanger 60 and thus be part of a single water heating system 50 of a building. Such system 50 may provide for integrating the thermal energy required by the edificial with a traditional boiler, benefiting at the same time of the important advantage of heating an already considerably preheated mount of water.

In this case, the burner 33 and the exchanger 60 operate just like in a normal boiler.

More in detail, the diagnostics employed by the plant provide for thermal probes 36 for detecting the temperature. Advantageously, a first thermal probe 36 shall be arranged in the first tank 3 for the reactants 5 and a second probe 36 shall be arranged in the reactor chamber 24.

Further provided for is the use of at least one infrared probe 37 for detecting the amount of water (vapour) and carbonaceous compounds present in the syngas 31. Such probe 37 is arranged at a suitable distance from the torch 25 where the compounds of the syngas have reached stable bonds. Carbonaceous compounds and vapour emit radiations at determined intervals detected by the probe 37 such intervals indicating (with a small margin of error) the absolute amounts of such components present in the syngas 31. From such values and the temperature values, it is possible to know the value of chemical energy and the thermal energy (partially due to the water vapour) present in the syngas 31 flow and calculate the chemical reactions occurring in the burner 33.

Therefore, according to values detected by the abovementioned sensors and the programmed logic control unit, a regulation of the amount of product to be introduced into the reactor 24 is obtained.

In particular, the sensors constantly detect the temperature and the presence of carbon and vapour inside the reactor 24. Should the detected temperature be lower than the standard operation temperature of the plasma torch 25 or should the infrared probe 37 detect the presence of an excessively low amount of carbon to allow the pyrolysis, a control unit signal is sent to the actuation of the feed screws and to the valves of the pipes communicating the abovementioned tanks with the reactor 24 and the amount of wet 14 and inert vitreous 17' products is reduced. On the other hand, should the detected temperature exceed the operation temperature or should the infrared probe 37 detect an excessive amount of carbon capable of damaging the reactor 24, the control unit sends a signal to the actuation of the feed screws and to the valves of the pipes to reduce the amount of the reactant substances 5 and increase for example the amount of inert vitreous products 17' and/or of the wet products 14 and/or of the water 21.

The amount of oxygen introduced by the pipe 34 into the burner 33 required for the reaction may be regulated by means of a valve 38 directly from the logic control unit according to the values of the amounts of the single components, according to the temperature values provided by the thermal probes 36 and according to the quantity values of vapour and carbonaceous compounds provided by the infrared probes 37. Otherwise, in order to enable a perfectly stechiometric reaction the amount of oxygen present in the synthesis gas 31 shall be constantly measured using the lambda probes 39 preferably arranged upstream and downstream the burner 33.

In particular, the lambda probes 39 are fitted in zones passed through by the fumes where a stabilised flow is present to detect, through analysis of the radiations emitted, the amount of oxygen present in the fumes downstream of the burner.

Due to the aforedescribed diagnostics, the control unit checks whether the energy content is compatible with the combustion and controls te products to be introduced into the reactor according to the set logic which might privilege (usually) the waste disposal or the production of electric energy or the production of thermal energy.

Upon exit from the burner 33 the gases might still contain sulphur and might be advantageously extracted, in particular in presence of considerable amount of sulphur, with a filtration unit 40 comprising bicarbonate injections (sodium bicarbonate) suitably eliminated by means of a subsequent cyclone filter. Such technique well known to a man skilled in the art shall be illustrated in detail.

Advantageously, in order to further reduce the pollutants present in the fumes exiting from the burner 33 provided for might be a further gas/gas exchanger 41 for example obtained by means of a pack of plates internally and externally passed through by the two gases, wherein the gases coming from the combustion are heated again and then ignited to provided a post-combustion and burn possible unburnt substances.

The abovementioned post-combustion is facilitated by the introduction into the pipes of a further amount of oxygen by means of an injector. The oxygen demand is regulated in an accurate manner by the lambda probe 39 arranged downstream of the burner 33 which detects the amount of oxygen present in the burnt oxygen and thus the amount of oxygen still required to complete the post-combustion with the oxidation of all the unburnt substances still present in the fumes.

Otherwise, provided for might be a catalytic converter 42 particularly in case the amount of unburnt substances and sulphur is limited.

Before being released into the atmosphere through the chimney 43 the gases are further treated by means of a second water/gas heat exchanger 44 to recover all the thermal energy still held therein in particular condensing the water vapour present in the fumes.

## Claims

1. Waste disposal plant, in particular municipal waste, which comprises:
- at least one first tank (3) for holding reactant substances (5) with high amounts of carbon;
- at least one second tank (9) for holding dry products containing lower amounts of carbon with respect to the one of said reactant substances (5);
- at least one water pipe (20) intercepted by at least one valve (23) for a controlled supply of the plant with water (21);
- at least one reactor (24) provided with at least one plasma torch (25);
- one logic control unit adapted to convey to said reactor (24) controlled amount of said reactant substances, of said dry products and of said water (21) through said first controlled actuation transport means, second controlled actuation transport means and said water pipe (20) intercepted by said valve (23), determining its disintegration through pyrolysis with formation of wastes (32) and a synthesis gas (31) having contents in carbonaceous compounds, in water vapour and in oxygen measured by diagnostics means (36, 37, 39) arranged to intercept the synthesis gas (31) and controlled in feedback by said logic controlled unit in communication with said diagnostics means (36, 37, 39), through the controlled actuation of said first and second transport means and said valve (23) of said water pipe (20).

2. Plant according to claim 1, **characterised in that** said synthesis gas (31) is enriched to provide a combustion with an oxidant mixture (35), in particular oxygen, supplied by means of a pipe (34) in a manner regulated by the logic control unit through a valve (38).

3. Plant according to claim 2, **characterised in that** said combustion is exploited in an engine or in a turbine (80) for generating electric energy.

4. Plant according to claim 2, **characterised in that** said combustion is exploited in an exchanger (60) for generating thermal energy for a heating system.

5. Plant according to claim 1, **characterised in** said diagnostics means comprise at least one lambda probe adapted to intercept the flow of the synthesis gas to detect, through analysis of the radiations emitted, the amount of oxygen present therein.

6. Plant according to claim 1, **characterised in that** said diagnostics means comprise at least one infrared probe (37) adapted to intercept the flow of synthesis gas to detect, through analysis of the radiations emitted, the amount of vapour and carbonaceous compounds present therein.

7. Plant according to claim 1, **characterised in that** said diagnostics means comprise at least one thermal probe (36) for detecting the temperature inside the reactor.

8. Plant according to claim 1, **characterised in that** it comprises at least one third tank (12) for holding wet products.

9. Plant according to claims 1 and 8, **characterised in that** said first tank (3), said second tank (9) and said third tank (12) are provided with loading cells (7) connected to said control unit.

10. Plant according to claim 1, **characterised in that** it comprises at least one fourth tank (15) for holding inert minerals.

11. Plant according to claim 1, **characterised in that** it comprises a framework (2) fixed below the road level emerging from which are the pipes (4, 16, 10, 13) for supplying the tanks and chimney (43) for discharging the fumes.

12. Plant according to claim 1, **characterised in that** it comprises a second exchanger (44) for intercepting the fumes before being released by a chimney (43) to discharge the fumes.

13. Plant according to claims 1, 8, 10 **characterised in that** it comprises a grinder and/or a compactor adapted to receive the products in foamed form from a pipe and introduce them in compact form into one of said tanks.

14. Waste disposal process, in particular for municipal waste, by means of a plant according to claim 1, which comprises:
- an initial starting step, wherein the plasma torch (25) is supplied with water and said reactant substances (5) with high carbon content;
- a step for analysing the synthesis gas through diagnostics means (36, 37, 39);
- at least one operating step wherein said logic control unit controls the channelling, to said reactor (24), of controlled amounts of said reactant substances, said dry products and said water (21) through the control of said first transport means, said second transport means and said valve (23) of the water pipe (20), maintaining the carbonaceous compounds, water vapour and oxygen contents measured by the diagnostics means in said synthesis gas within the preset values.

15. Waste disposal process according to claims 8, 10 and 14 wherein between said starting step, and said operating step further provided for is a plant setting step wherein the measured amounts of components coming from said second, said third or said forth tank supply said torches for measuring the carbonaceous compounds, water vapour and oxygen amounts measured by said diagnostics means in said synthesis gas, of the components contained in the various tanks.
